# EUROPEAN PATENT SPECIFICATION

(11) **EP 3 225 468 B1**
(45) Date of publication and mention of the grant of the patent: **24.10.2018**
(21) Application number: 16163112.2
(22) Date of filing: 31.03.2016
(51) Int. Cl.: B60R 9/058

(54) **A LOAD CARRIER FOOT FOR A ROOF RACK**
LASTTRÄGERFUSS FÜR EINEN DACHTRÄGER
PIED DE SUPPORT DE CHARGE POUR GALERIE DE TOIT

(43) Date of publication of application: 04.10.2017
(73) Proprietor: Thule Sweden AB, 330 33 Hillerstorp (SE)
(72) Inventor: FERMAN, Magnus, 33154 Värnamo (SE)

(56) References cited:
- EP-A1- 0 609 152
- DE-A1- 19 740 820
- DE-U1- 29 511 735
- US-A- 2 890 852

## Description

### TECHNICAL FIELD

The present invention relates to a load carrier foot, a roof rack comprising at least one load carrier foot, and a method for assembling a load carrier foot to a vehicle. The load carrier foot has a body which is adjustable about three axes, and comprises an attachment member which clamps a floor portion of the body to the vehicle roof.

### BACKGROUND

Roof racks are commonly known to be a good way of increasing a vehicles load capacity. They have developed during the years into distinct and different type of load carrier feet each type having its own characteristics. One type of load carrier foot is adapted to be positioned at different positions on the vehicles roof, i.e. it has no predesignated position. Such load carrier foot is extra advantageous as they do not require the vehicle manufacturer to prepare a designated position on the vehicle roof. As such they are in a way favorable in terms of that they can be positioned at different positions on the vehicle roof for example dependent on which load that is to be carried on the vehicle roof. One general retaining mechanism used for these types of load carrier feet are a clamping bracket which cooperates with an attachment member adapted to impart a clamping force between a support surface of the load carrier foot which rests on a portion of the vehicle roof, and the clamping bracket. The drawbacks of these kinds of load carrier feet are that the retaining mechanism is based solely on the friction which is created by the clamping bracket and the support surface.

A second type of load carrier feet are those referred to as fix point load carrier feet. A fix point load carrier foot is adapted to be attached at a predesignated and fixed position on the vehicle roof. Such attachment point can be a nut welded to the vehicle roof for example. A fix point load carrier foot has the advantage of providing a load carrier/vehicle connection which is sturdy and rigid, as it may practically be screwed into the vehicle roof, in comparison with just using friction forces to be retained to the vehicle roof. However, as different vehicles, different models have different sizes; widths, roof slopes and so forth, it has generally been difficult to provide one type of fix point load carrier foot which can be positioned or used with different vehicles, or different models, as each specific model generally requires that each load carrier foot is adapted to that specific model.

DE 295 11 735 U1 discloses a roof rack for a vehicle according to the preamble of claim 1.

### SUMMARY

It is an object of the present invention to provide a fix point load carrier foot for a roof rack for a vehicle. The load carrier foot comprises a body comprising a pivot surface, e.g. a vehicle facing surface, a load carrying bar facing surface or a load carrier foot facing surface. The at least one pivot member is positioned adjacent the pivot surface so that a slip joint is formed. The slip joint permits the body and/or the load carrying bar to be adjusted about three axes. The load carrier foot comprises an attachment member connectable to a fixed connection point on the vehicle and operable between an attachment position and a release position.

The fix point load carrier foot provides for an adjustable load carrier foot which can be used for different vehicles, or different models. The fix point load carrier foot enables a reduction in tool costs and the number of article numbers required. It also enables a substantially simultaneous adjustment about the three axes with relatively few components.
The load carrier foot provide a swivel function permitting customer adjustability, preferably up to ±10°, more preferably ± 8°, even more preferably ± 6°, about the three axes.
The load carrier foot may form a kit of two load carrier feet and a load carrying bar, i.e. a roof rack and preferably a pair of roof racks. The load carrier foot is advantageous when the load carrying bar is an over running cross bar, i.e. when the load carrier foot, or load carrier feet, are arranged to be positioned a distance from the opposing ends of the load carrying bar and the load carrying bar extend across and past each load carrier foot when mounted.

The body may comprise a floor portion. The floor portion may be provided with a curved shape forming the pivot surface e.g. vehicle facing surface and/or a clamping member facing side. The vehicle facing surface and the clamping member facing surface are preferably formed by a floor portion having a uniform thickness so that the both surfaces has the same curvature and shape although having slightly different radius. The curved floor portion of the body provide the load carrier foot with a portion of a ball and socket joint, or mounting site, in which the body forms the socket portion of the ball and socket joint. In a similar manner, the top portion or side portion of the body may be provided with a curved shape forming the pivot surface.

The pivot surface of the body may be a vehicle facing surface e.g. on the floor portion of the body, a load carrying bar facing surface, e.g. on the top portion of the body, or a load carrier foot facing surface e.g. on the side portion of the body. By load carrier foot facing body, is mean that side of the body which faces the opposing load carrier foot of a roof rack when mounted to a vehicle.

The body or the pivot member, e.g. the floor portion, may comprise one or more apertures. The attachment member, or a connection element, may extend through at least one of the one or more aperture. Preferably the diameter of the one or more aperture apertures is larger than the diameter of the attachment member providing a play between the attachment member and the at least one of the one or more aperture. The play between the one or more apertures and the attachment member permits the body or the pivot member to be displaced about the three axes. The one or more apertures may have a diameter which is at least 20 % larger, preferably at least 40 % larger, optionally about 20-200 % larger, optionally 20-150 % larger, than the diameter of the attachment member, or of the diameter of the corresponding connection element extending there through. The aperture may be of different size as well, as long as the diameter of the aperture is larger than the corresponding connection element permitting the relative displacement along the three axes X, Y, Z.

Instead of having e.g. two or more apertures, e.g. three apertures as disclosed below, the body or pivot member may be provided with one single relatively large aperture through which the attachment member may extend together with any additional connection members for e.g. connecting a clamp member with the pivot member. In case of using one large aperture, the clamp member needs to overlap the one large aperture to provide a friction coupling between the clamp member, the body and the pivot member.

The at least one pivot member may form at least a portion of a ball and socket joint with the pivot surface of the body, such as the vehicle facing surface of the body and/or with the load carrying bar facing surface of the body. The pivot member may be arranged with a curved surface which corresponds to the curvature of the pivot surface of the body, such as the vehicle facing surface. The cooperating surfaces of the body and the pivot member may be smooth or may be formed by indents and/or protrusions. With smooth surfaces, the position of the body may be changed in a non-step wise manner, in comparison to when having surfaces having indents and/or protrusions which cooperate to provide fixed number of available positions which only permits a step-wise change between positions. It should be noted that even though the surface is provided with indents and/or protrusions, the main shape of the surfaces are still curved in a cooperating manner. The opposing surfaces may be provided with friction increasing material such as a friction increasing film.

The attachment member may be arranged so that at least one pivot member is clamped by the attachment member between the vehicle facing surface of the body and the vehicle when the attachment member is in the attachment position. The attachment member when being fixed to the vehicles fixed attachment point can be arranged so that is imparts the pivot member with a clamping force. This improves the connection between the pivot member and the body, as the force from the attachment member is used in addition to the other available attachment mechanism.

Optionally or additionally, the attachment member may be arranged so that at least one pivot member is clamped by the attachment member between the load carrying bar facing surface and the load carrying bar when the attachment member is in the attachment position. The load carrying bar may be retained to the body using the attachment member, or by another mechanism such as via one or more screws, bolts, a snap on connection or the like.

The attachment member may extend through the at least one pivot member via an aperture or cut out. The attachment member imparts the clamping force in an advantageous manner when the clamping force is directed across the thickness of the pivot member.

The at least one pivot member may have a smooth surface providing a step-less displacement between the available positions, or a plurality of protrusions and/or indents providing a fixed number to available positions.

The load carrier foot may further comprise at least one clamp member. The at least one clamp member may be arranged between the vehicle facing surface of the body and a portion of the attachment member, preferably the portion of the attachment member which is adapted to engage the fixed attachment point on the vehicle. Preferably the at least one clamp member comprises at least one connection member connectable to the at least one pivot member to provide a rigid connection there between. The least one connection member can be a screw and nut, a bolt, a snap on connection member, a clamping connection member or the like.

The attachment member may have an operable brace portion. The operable brace portion of the attachment member is arranged to impart a clamping force across the at least one pivot member. The body may be provided with an interior space and the operable brace portion may be arranged in the interior space of the body. Preferably the operable brace portion is formed by a lever, a nob, a nut, screw head or the like. The body may thus act as a protective housing to the brace portion and to at least to a portion of the attachment member. The attachment member is preferably an elongated pin, such as a steel pin, provided with threads or other engaging portions for attaching to the operable brace portions and/or the fixed attachment point of the vehicle. The attachment member may be a treaded pin for example.

The operable brace portion may be displaceably arranged on the attachment member. The brace portion is preferably displaceable along the length of the attachment member, e.g. via a threaded coupling.

According to an aspect, the body has an interior space and the operable brace portion is arranged outside of the interior space of the body. In an embodiment, the operable brace portion of the attachment member may be positioned on the side of the body of the load carrier foot for example.

The attachment member may optionally be positioned to brace against the floor portion of the body. In cases where there is no clamp member, it may be advantageous if the attachment member braces directly against the floor portion of the body to retain the body in position.

The pivot surface of the body, such as the vehicle facing surface of the body and/or the load carrying bar facing surface may have a shape formed by a first radius. Optionally or additionally, the at least one pivot member may have a body facing surface, the body facing surface may have a shape formed by a second radius, preferably the first radius is equal to the second radius. Cooperating surfaces achieved via shapes having equal radiuses provide good ball and socket type connections. The pivot surface of the body may have a convex curvature or concave curvature, and the pivot member may have a corresponding curvature. For example, if the body has a convex curvature, the pivot member has a concave curvature and vice versa.

According to an aspect, the load carrier foot disclosed herein may be a part of a roof rack. It is also within the boundaries of the present invention to provide a roof rack comprising at least one, preferably two load carrier feet. The roof rack may comprise a first and a second load carrier foot and a load carrying bar. The load carrying bar may be arranged to the load carrier feet, or connectable to the load carrier feet. A set of two roof racks are also provided.

The load carrier foot may be provided with at least one pivot member. The pivot member is adapted to be positioned on the vehicle or on the load carrying bar, but preferably adjacent the body of the load carrier foot. The pivot member may be formed by more than one individual member but functioning in the same manner. The plurality of pivot members preferably share a curved surface in terms of that they are aligned with an imaginary surface connecting the plurality of pivot members, so as to form a portion of a ball of a ball and socket joint. At least one pivot member may be positioned between the body and the vehicle after assembly. The position of the body can thus be adjusted with respect to the at least one pivot member about the three axes. In a similar manner, at least one pivot member may be positioned between the body and the load carrying bar after assembly, wherein the position of the load carrying bar can be adjusted with respect to the pivot member about the three axes.

The body of the load carrier foot is preferably made of sheet metal, but other material such as composite plastic may be used. The pivot member can also be made of sheet metal or composite plastic. Other material options are available but should be selected so as to withstand the loads imparted to a roof rack.

### BRIEF DESCRIPTION OF THE DRAWINGS

Non-limiting embodiments of the present invention will be described in greater detail with reference to the accompanying figures in which;
figure 1 shows a roof rack arranged on a vehicle, the roof rack comprises a first and a second load carrier foot according to the present invention, and a load carrying bar extending between the first and the second load carrier foot;
figure 2 shows a cross section of a load carrier foot of figure 1;
figure 3 shows the load carrier foot of figure 2 with an exploded view;
figure 4 shows an embodiment of a partly exploded cross sectional view of a load carrier foot in which the load carrying bar can be adjusted about three axes;
figure 5 shows an embodiment of a partly exploded cross sectional view of a load carrier foot in which the load carrying bar can be adjusted about three axes and;
figure 6 shows an embodiment of a partly exploded cross sectional view of a load carrier foot in which the load carrying bar can be adjusted about three axes and;
figure 7 shows portions of the body from figure 2, 3 and 6 with the oversized apertures in greater detail;
figure 8 shows a schematic process for mounting and dismounting a load carrier foot.

### DETAILED DESCRIPTION

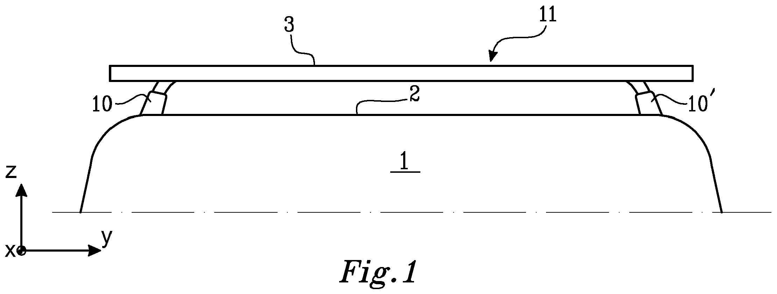

Figure 1 shows a vehicle 1 having a roof 2. A roof rack 3 is attached to the roof 2. The roof rack 3 comprises a first and a second load carrier foot 10, 10'. A load carrying bar 11 extends across the roof 2 in a transverse direction with respect to the longitudinal direction of the vehicle 1. Generally the roof racks 3 are provided on the vehicle 1 as a pair of roof racks 3 to provide the vehicle 1 with an extended loading capacity. Load such as sports equipment, luggage, accessories such as roof boxes, bike carriers, canoe carriers, building material or the like may be mounted on the roof rack 3.

For the purpose of orientation; three axes X, Y, Z are used, each axis being perpendicular to the other. The X axis corresponds to the length of the vehicle, the Y axis corresponds to the width of the vehicle and the Z axis corresponds to the height of the vehicle, after the roof rack 3 has been mounted on the vehicle 1. The load carrier feet 10, 10' are of the fix point type, i.e. fix point load carrier feet, although they will be referred to only as a load carrier foot hereafter. A fix point load carrier foot is specifically adapted to be mounted to a fixed attachment point on the vehicle. They generally have a surface adapted to rest on a portion of the vehicle, and an attachment member which is adapted to cooperate in a retaining manner with the attachment point of the vehicle. When viewed as shown in figure 1, adjustment about the Y axis is generally referred to as side angle, adjustment about the X axis is generally referred to as lean out and, adjustment about the Z axis is generally referred to as toe out.

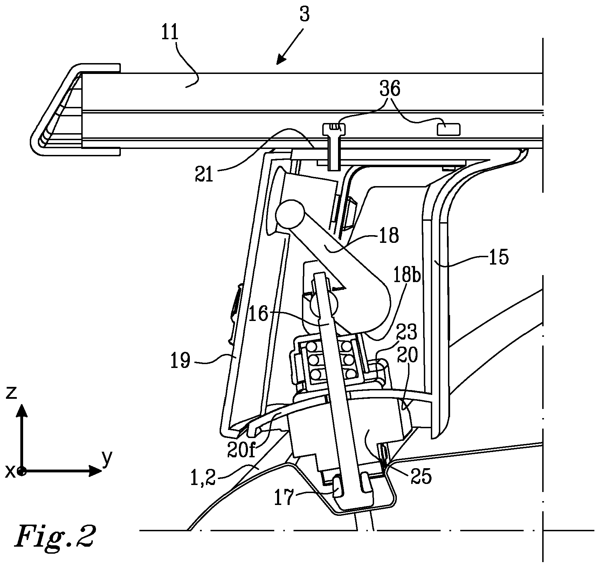

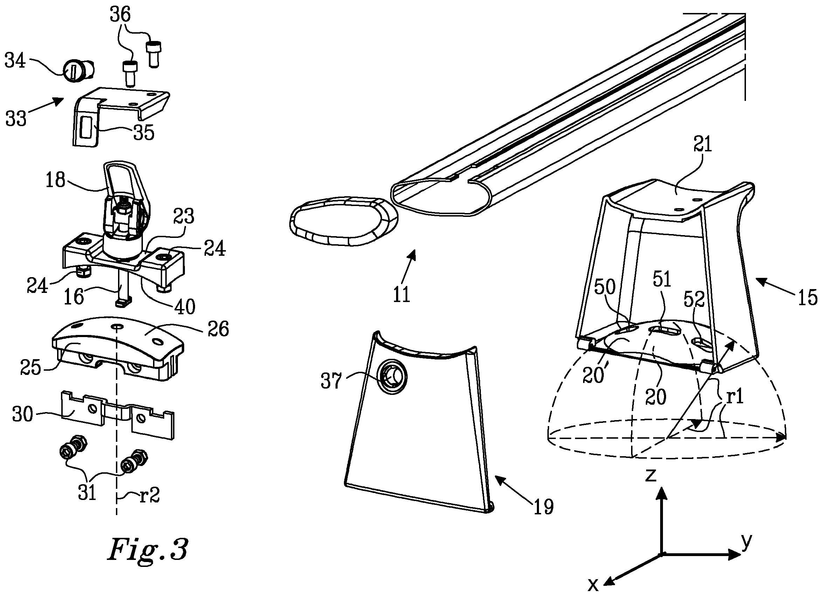

Figure 2 shows a load carrier foot 10 in greater detail. Although only one load carrier foot is described, it should be noted that the roof rack 3 may be provided with one or two load carrier feet 10 as disclosed herein. Figure 2 shows a portion of the vehicle 1 and the roof 2. Only a portion of the roof rack 3 is shown. The load carrier foot 10 comprises a body 15. The body 15 is the main component to carry and support the weight of the load arranged to the load carrying bar 11 against the vehicle 1. The body 15 comprises a vehicle facing surface 20 and a load carrying bar facing surface 21. The vehicle facing surface 20 is facing the vehicle 1 and more precisely the roof 2 of the vehicle after being mounted to the intended position on the vehicle. It is formed by a floor portion 20f of the body 15. The load carrying bar facing surface 21 is facing the load carrying bar 11 after being assembled with the load carrying bar 11. In the shown embodiment, the load carrying bar 11 is positioned adjacent the load carrying bar facing surface 21 of the body 11. In other embodiments, one or more intermediate member may be present. The load carrying bar facing surface 21 may have different shapes such as curved, flat, specific load carrying bar receiving pockets or the like. The load carrier foot 10 shown in figure 2 has a curved load carrying bar facing surface 21 for receiving a load carrying bar 11 having a corresponding curved surface (shown in figure 3). The load carrying bar 11 is in the shown embodiment bolted to the load carrying foot 10 via bolts 36. The vehicle facing surface 21 forms a pivot surface in this case.

The load carrier foot 10 further comprises at least one pivot member 25. The load carrier foot 10 shown in figure 2 has one pivot member 25 arranged adjacent the vehicle facing surface 20 of the body 15. The pivot member 15 is adapted to provide a position adjustment function to the body 15 about the three axes X, Y, Z. The load carrier foot 10 thus comprises an adjustment arrangement permitting adjustment about three axes. The pivot member 25 is further adapted to be positioned towards the vehicle 1 and the fixed attachment point to provide a lenient surface against the vehicle roof 2 while still providing support and stability to the load carrier foot 10.

A clamp member 23 is arranged to cooperate with the pivot member 25 in terms of rigidly retaining the selected position of the body 15 by providing a rigid connection between the pivot member and the clamp member, as will be described in greater detail with respect to figure 3. The clamp member 23 assists in increasing the friction to the body, thus in retaining the body in the desired position.

The load carrier foot 10 also comprises at least one attachment member to retain the load carrier foot to the vehicle. The load carrier foot 10 shown in figure 2 has one attachment member 16. The attachment member 16 is operable by a user between an attachment position, as shown in figure 2, in which the load carrier foot 10 is retained to the vehicle permitting the roof rack 3 to be used with the vehicle 1 in an intended manner, and a release position (not shown) in which the load carrier foot 10 may be removed from the roof 2 of the vehicle 1. The attachment member 16 is operated via a lever 18. The lever 18 has a brace portion 18b adapted to brace against the underlying surface.

An openable body cover 19 is arranged to cover the interior of the body 15 so that the load carrier foot 10 has an aesthetically pleasing appearance, as well as at least partly prevents dirt, water or dust to penetrate into the load carrier foot 10.

Each component will be described in greater detail with reference to figure 3. Figure 3 shows the load carrier foot 10 in an exploded view. Figure 3 shows the body 15 with the vehicle facing surface 20 and the load carrying bar facing surface 21. As can be noticed, the vehicle facing surface 20 has the shape of a portion of a hemisphere which cooperates with a surface 26 of the pivot member 25 having a corresponding shape. The vehicle facing surface 20 thus has a shape formed by a radius r1. The cooperating surface 26 of the pivot member 25, which is positioned adjacent the vehicle facing surface 20 of the body 15, has a shape formed by a radius r2, as indicated in figure 3. The pivot member 25 together with the shape of the vehicle facing surface 20 of the body 15 forms a ball and socket joint, permitting the position of the body to be slightly displaced about the three axes X, Y, Z, to fit the specific vehicle which the roof rack is intended to be mounted on.

The pivot member 25 may be provided with a support element 30. The support element 30 is formed by a bracket, preferably of sheet metal, attached to the pivot member 25 via two screws and nuts 31. The support element 30 provides increased rigidity to the pivot member 25 and reduces wear on the pivot member 25.

A lock arrangement 33 comprising a lock cylinder 34, a lock flange 35 attachable via bolts 36 to the interior of the body 15, as can be shown in figure 2. The bolts 36 also function to attach the load carrying bar 11 to the body 15. The lock cylinder 43 will be operable via an aperture 37 in the openable body cover 19. The lock cylinder 34 is attached to the body cover 19 as the aperture 37 so that the openable body cover 19 may be locked on a closed position.

Further shown in figure 3 is the load carrying bar 11. The load carrying bar 11 is an aluminum load carrying bar formed by extrusion. It has a generally wing shaped cross section. The load carrying bar facing surface 21 of the body 15 has a corresponding shape to the load carrying bar 11, enabling the load carrying bar 1 to be snugly fit to the body 15 and attached thereto. In an embodiment, a pivot member similar to the pivot member 25 may be positioned between the body 15 and the load carrying bar 11 providing the load carrying bar with the an adjustment arrangement so that the load carrying bar 11 can be adjusted about three axes X, Y, Z with respect to the body 15 if desirable. The adjustment is done by continuously or intermittently slide the pivot member 25 on the pivot surface of the body, thus forming a slip joint.

The clamp member 23 has a pivot member facing side 40 having a corresponding form by a radius r3, which is slightly larger than the radius r1 to compensate for the thickness of the floor portion of the body 15 which underside forms the vehicle facing surface 20, and which upper side forms a clamping member facing side 20'. Again, the principle of a ball and socket joint is used to provide a clamp member 23 which can be retained to the pivot member 25 while still permitting the position of the body 15 to be adjusted. The clamp member 23 is retained to the pivot member 23 via screws and nuts 24, in this case two screws with nuts. Other attachment principles are of course possible. Just as a matter of example, it may be enough that the attachment member 16 is used to retain the position of the body 15 by clamping the body 15 to the pivot member 25. Optionally or additionally, a clamp member may be used such as the clamp member 23. The clamp member 23 may be attached with one or more attachment elements such as one or more screws, pins, bots or the like. Attachment element(s) which a user, such as the driver, may manipulate in terms of attach and release is advantageous as it permits the user to position and adjust the load carrier foot to the specific vehicle.

Turning back to the body 15 in figure 3, as is noticed, the floor portion 20f of the body 15 comprises three apertures; a first side aperture 50, a center aperture 51, and a second side aperture 52. The center aperture 51 is arranged at the blunt "apex" portion of the hemispherical form, and adapted for the attachment member 16 to extend there through. The first and the second side apertures 50, 52 are adapted to permit access for the attachment elements of the clamp member 23 to improve the fixation of the body 15 with respect to the pivot member 25. The aperture of the floor portion of the body 15 has a diameter which is slightly larger than the diameter of the respective attachment element or attachment member. The increase in diameter extends around the whole of the periphery of the attachment element, so as to permit the free movement about the three axes X, Y, Z. The play between the slightly larger diameter of the apertures 50, 51, 52 and the attachment elements permits the body 15 to be displaced with respect to the pivot member 25 and the clamp member 23 before the clamp member 23 is rigidly retained to the pivot member 25 via the screws and nuts 24. The apertures 50, 51, 52 are preferably large enough so as to permit the body 15 to be displaced from 1-10 degrees, preferably 1-6 degrees. As can be noticed, the apertures are elongated, hence, the diameter referred to above of the aperture(s) is preferably a minimum diameter across the narrow part of the elongated aperture. The length of the elongated aperture may be approximately twice the mentioned diameter. In a general manner, the body may thus be provided with one or more elongated apertures having a minimum diameter which is larger than the attachment member to permit free movement about the three axes X, Y, Z. Preferably a maximum diameter of 2-4 times the minimum diameter.

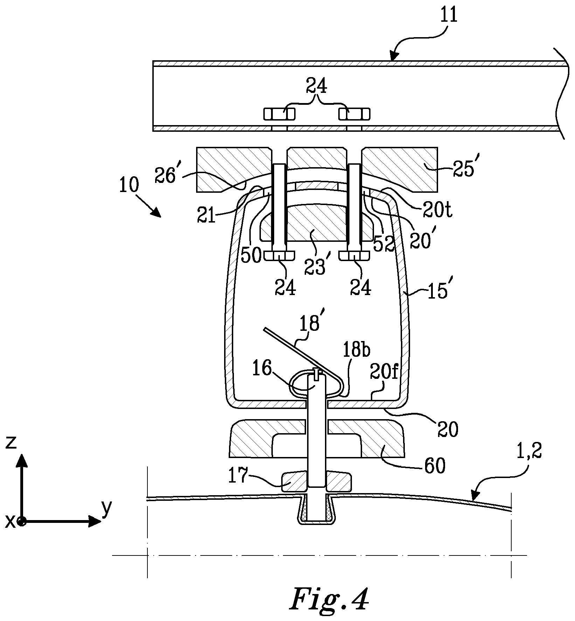

Figure 4 shows an embodiment with features that can be combined if desirable with the load carrier foot described above. The load carrier foot 10 shown in figure 4 comprises a body 15'. As mentioned above, the body 15' is the main component to carry and support the weight of the load arranged to the load carrying bar 11 against the vehicle 1. The body 15' comprises a vehicle facing surface 20 and a load carrying bar facing surface 21. The vehicle facing surface 20 is facing the vehicle 1 and more precisely the roof 2 of the vehicle 1 after being mounted to the intended position on the vehicle 1. It is formed by a floor portion 20f of the body 15. The body 15' also has a top portion 20t which forms the load carrying bar facing surface 21. The load carrying bar facing surface 21 is facing the load carrying bar 11 after being assembled with the load carrying bar 11. In the shown embodiment, the load carrying bar 11 is positioned adjacent a pivot member 25'. The pivot member 25' may be formed by one or more members, in this case formed by one single member. The pivot member 25' comprises a body facing surface 26'. The body facing surface 26' of the pivot member 25' and the load carrying bar facing surface 21 of the body 15' forms a slip joint, and have cooperating curved surfaces with the same radius or substantially the same radius, enabling the position of the load carrying bar 11 to be adjusted about the three axes X, Y, Z, as disclosed above. The radiuses are similar as disclosed above and adapted to provide the ball and socket function of adjustment about the three axes.

A clamp member 23' is attachable to the pivot member 25' via screw and nuts 24. Apertures 50, 52 in the body 15' having a larger diameter than the connection elements extending there through permits the position of the load carrying bar 11 to be adjusted about the three axes X, Y, Z. The clamp member 23' and the pivot member 25' can thus be positioned relatively to the body 15' and thereafter clamped to the body 15' in a similar manner as described above. An attachment member 16' comprising a lever 18' having a brace portion 18b which operates via a cam surface functioning as an eccentric just as the lever 18 of figure 2 and 3. The attachment member 16' retains the body 15' to the vehicle roof by the clamping force imparted by the attachment member 16' upon activation, i.e. when being in the attachment position.

Further shown in figure 4 is a support member 60 adapted to provide a lenient surface towards the vehicle roof 2. A fixed attachment point 17 on the roof 2 of the vehicle 1, in this case in the form of a nut. The attachment member 16' is adapted to engage with the fixed attachment member 17 to retain the load carrier foot 10 to the vehicle 1.

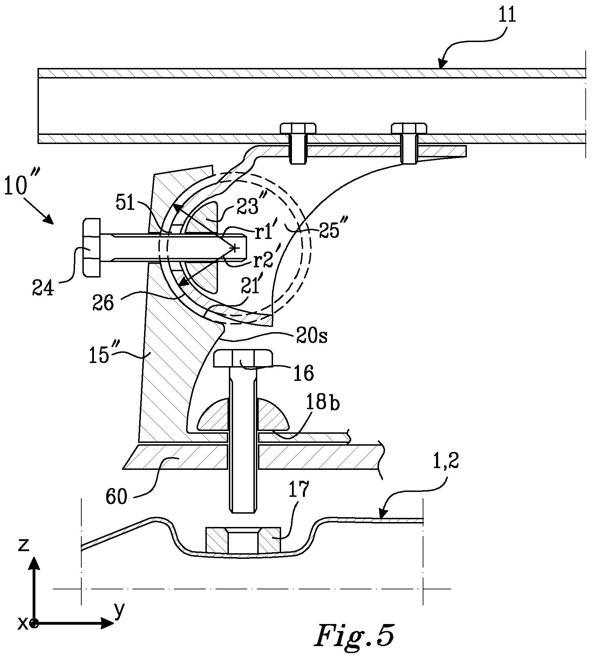

Figure 5 shows an alternative embodiment of a load carrier foot 10". The load carrier foot 10" comprises a body 15" having a pivot surface 21' and a pivot member 25" having a body facing surface 26. The pivot member 25" is positioned adjacent the pivot surface 21' of the body 15" and forms a slip joint enabling the pivot member 25" to be displaced about three axes X, Y, Z in a ball and socket type of manner. Hence, the slip joint may be formed by a portion of a ball and socket joint. A clamp member 23" operable via a screw 24 is adapted to fix the position of the pivot member 25" with respect to the body 15" by a friction connection. The screw 24 extends through and aperture of the body 15" and an aperture arrange in the pivot member 25". The aperture of the pivot member 25" is larger than the diameter of the screw 24 so that the position of the pivot member 25" can be changed with respect to the body 15" about the three axes X, Y, Z. In this manner a roof rack can be adjusted to fit with different vehicles or vehicle models. Once the load carrier foot has been positioned, the load carrying bar 11 is fixed with respect to the body 15" via the screw 24, the clamp member 23". The adjustment once made does not need to be readjusted every time the load carrier foot, or the roof rack, is mounted on the vehicle. The pivot surface of the body 15" is arranged on the side, as compared to the embodiments described with reference to figures 2-4 in which the pivot surface is arranged on the floor portion or the top portion of the body. As further can be noticed, the radius r1' of the pivot surface 21' of the body 15" and the corresponding radius r2' of body facing surface 26 of the pivot member 25" of the slip joint is also illustrated.

An attachment member 16 is adapted to be engaged with a fixed attachment point 17 on the vehicle 1 roof 2. The attachment member 16 comprises a brace portion 18b displaceably arranged on the attachment member 16 via e.g. threads. The brace portion 18b is in this case formed by an operating handle e.g. of wing nut type. A support member 60 is positioned between the body 15" and the vehicle roof 2 to provide a lenient surface towards the vehicle roof 2.

The pivot member(s) above has been disclosed as being connectable to the load carrying bar, but it may be formed as an integral part of a load carrying bar when appropriate. It is thus within the boundaries of the present invention to provide for a load carrying bar having a pivot surface for a slip joint adapted to permit the adjustment of the load carrying bar about three axes.

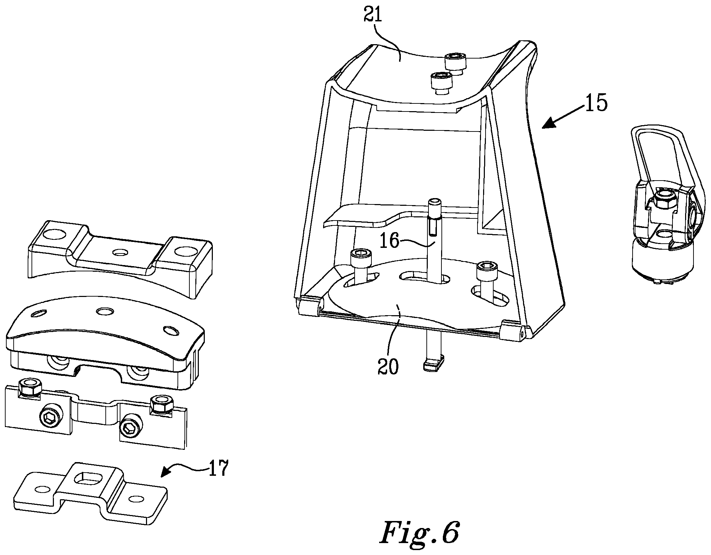

Generally, the slip joint may be fixed by using a friction mechanism, formed by e.g. an attachment member and optionally a clamp member. When operating the attachment member the clamp member clamps the pivot member towards the pivot surface of the body to fix the pivot member from displacement relative the body of the load carrier foot. The attachment member preferably comprises a threaded portion on which clamp member is threadably engaged, or as shown in figure 6 for example in which the clamp member is secured to the attachment member but displaceably arranged to the attachment member.

Figure 6 shows a load carrier foot 10 with an exploded view. Figure 6 shows the body 15 with the vehicle facing surface 20 and the load carrying bar facing surface 21. In the shown embodiment, the attachment member 16 comprises a T-shaped portion adapted to engage the fixed attachment point 17 of the vehicle (not shown). Instead of a threaded engagement, the T-shaped portion engages the fixed attachment point 17 in a hook like manner.

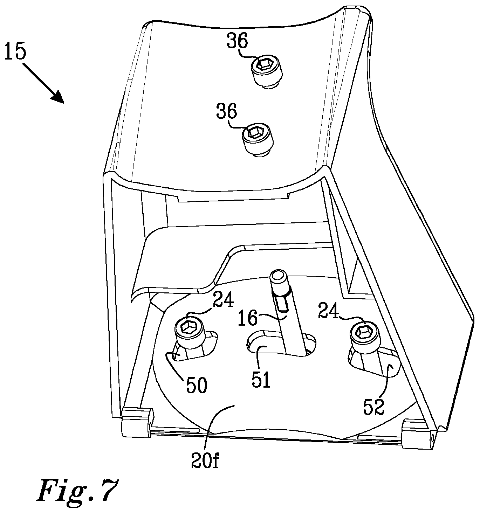

Figure 7 shows the body 15 with a view in perspective towards the interior of the body 15 and the floor portion 20f. The apertures 50, 51, 52 of the floor portion 20f are shown in greater detail. As can be noticed, the apertures 50, 51, 52 of the floor portion 20f is slightly oversized, permitting each connection element extending through the apertures 50, 51, 52 to be slightly displaced within the apertures 50, 51, 52. The clamp member 23 is not shown in figure 7. It should be noted that a clamp member is optional as the screws 24 can be clamping directly against the floor portion 20f of the body 15. At least one of the apertures 50, 51, 52 preferably has an elongated shape permitting a larger adjustment in a direction along the X axis. Just as a matter of example, the apertures of the body may be circular apertures or elongated apertures, and/or apertures having a diameter of at least 20 % larger, preferably about 20-200 %, more preferably 20-150 % larger than the diameter of the connection element extending through the aperture.

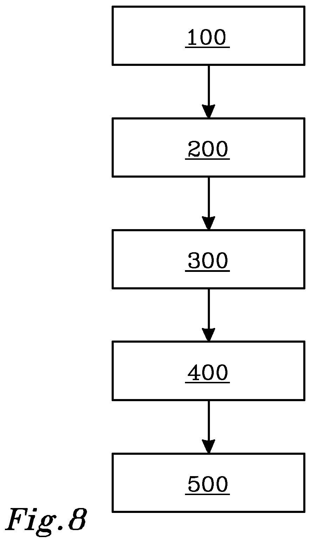

An assembly method will hereafter be described with reference to figure 8. The assembly method disclosed herein is applicable when positioning and mounting the load carrier foot for the first time, or to a new model, or simply adjusting or fine tuning the position of the load carrier foot, and likewise a roof rack comprising two load carrier feet. The method for mounting the load carrier foot comprises one or more of the following steps. Reference is also made to figures 2 and 3 but it should be noted that the method, and features disclosed in relation to the method, may just as well be applicable on other embodiments of the invention.

100; the pivot member 25 is positioned at the designated attachment point 17 on the vehicle roof 2. The positioning may be performed with the pivot member 25 attached to the body 15 of the load carrier foot 10 or not. The body 15 may be positioned onto the pivot member 25 subsequently after for example. Preferably the pivot member 25 is semi-attached to the body 15, i.e. not rigidly attached, enabling the relative positon between the pivot member 25 and the body 25 to still be changed. As the pivot member 25 and the vehicle facing surface 20 of the body 15, in this case formed by the underside of the floor portion, are cooperating through their curved surfaces at a slip joint, operating as a ball and socket joint or at least as a portion of a ball and socket joint, the position of the body 15 may adjusted about the three axes X, Y, Z.

200; the load carrying bar 11 is positioned to a middle position and to a horizontal position, so that a substantially equal length extends out on either side of the load carrying feet10, 10'. The load carrying bar 11 is fixed with e.g. a screw to the body of the load carrying foot 10, 10'. The fixation of the load carrying bar 11 does not need to be subsequently after the positioning of the load carrier feet 10, 10' but it simplifies the coming step if the load carrying bar 11 is secured to the body 15 of the load carrier feet 10, 10'.

300; Once the pivot member 25 is in place and the body 15 has been positioned for one and/or two load carrier feet 10, 10', the position of the body 15 is secured with respect to the position of the pivot member 25 by rigidly connected the body 15 to the pivot member 25 via e.g. screws 24. In the embodiment disclosed with reference to figures 2-3, this is done by clamping the clamp member 23 onto the upper side of the floor portion of the body 15 so that the floor portion is clamped between the pivot member 25 and the clamp member 23.

Once the initial steps 100, 200, 300 has been completed, there is no need to perform these if the load carrier foot 10, or the roof rack 3 is to be removed or re-mounted again. Once the load carrier foot has been adapted to the specific vehicle the adjustment does not need to be repeated, although it is an option. The attachment member 16 is engaged with the fixed attachment point of the vehicle. This may be done substantially any time; as a first step, second step or third step for example.

400; When the desired positions of one or both of the load carrier feet has been achieved, and the attachment member 16 can be operated by the user to fix the load carrier foot to the vehicle 1. In this case this is done by operating the lever 18. The lever 18 comprises a brace portion 18b which operates as a cam member, or eccentric, on the clamp members 23 upper surface. If the attachment member 16 has not been engaged with the fixed attachment point 17 of the vehicle 1, it may be engaged in this step. Once engage with the fixed attachment point 17 of the vehicle, the lever may be operated so that a clamping force is formed between the roof 2 of the vehicle 1 and the brace portion 18b of the attachment member 16. The clamping force imparted by the attachment member 16 is by this manner assisting in clamping the floor portion of the body 15 to the vehicle. The load carrier foot thus has a very advantageous attachment function in that the body 15 is readily clamped in position not only via the clamp member 25 but also via the attachment member 16 itself.

500; the lever may be positioned to a rest or storage position and the body cover 19 can be closed, giving the load carrier foot an aesthetic pleasing look as well as protecting the interior of the load carrier foot.

To unmount the roof rack, or the load carrier foot, the steps may be performed in the reversed order.

When mounting the load carrier foot shown in figure 4, the following steps may be performed. Reference is also made to figure 4 for the purpose of orientation.

100; The body 15', together with the support member 60 if such is present, is positioned at the designated attachment point 17 on the vehicle roof 2. The body 15' is fixed to the vehicle 1 via an attachment 16. Same is made with the second load carrier foot (not shown in figure 4).

200; optionally the load carrying bar 11 is positioned to a middle position, so that a substantially equal length extends out on either side of the load carrying feet 10, 10'. As the pivot member 25' and the load carrying bar facing surface 21 of the body 15', in this case formed by the upper side top portion 20f, are cooperating through their curved surfaces as a ball and socket joint, or at least as a portion of a ball and socket joint, the position of the load carrying bar 11 may adjusted about the three axes X, Y, Z. This enables the roof rack, i.e. the two load carrier feet and the load carrying bar, to be adapted to a specific vehicle or vehicle model.

300; Once the pivot member 25' together with the load carrying bar 11 is in place and the body 15' has been positioned for one and/or two load carrier feet 10, 10', the position of the body 15' is secured with respect to the position of the pivot member 25' by rigidly connected the body 15' to the pivot member 25' via e.g. screws 24. In the embodiment disclosed with reference to figures 4, this is done by clamping the clamp member 23' onto the underside of the top portion 20t of the body 15' so that the top portion 20t is clamped between the pivot member 25' and the clamp member 23'.

400; the attachment member 16' can thereafter be operated by the user to fix the load carrying bar 11. In this case this is done by operating the lever 18. The lever 18 comprises a brace portion 18b which operates as a cam member, or eccentric, on the clamp members 23'. The lever may thus be operated so that a clamping force is formed between the load carrying bar 11 the brace portion of the attachment member 16.

Once the initial steps 100, 200, 300 has been completed, there is no need to perform these if the load carrier foot 10, or the roof rack is to be removed or re-mounted again. Once the load carrier foot has been adapted to the specific vehicle the adjustment does not need to be repeated, although it is an option.

500; the lever may be positioned to a rest or storage position and a body cover can be closed, giving the load carrier foot an aesthetic pleasing look as well as protecting the interior of the load carrier foot.

When dis-mounting the load carrier foot shown in figure 4, the steps may be performed in reversed order. Similar or the same method steps may be employed for the load carrier foot shown in figure 5.

## Claims

1. A fix point load carrier foot (10) for a roof rack (3) for a vehicle (1), said load carrier foot (1) comprising a body (15), said body (15,) comprising a pivot surface (20), an attachment member (16) connectable to a fixed connection point (17) on said vehicle (3) and operable between an attachment position and a release position, wherein at least one pivot member (25) is positioned adjacent said pivot surface (20) of said body (15), wherein said pivot member (25) and said pivot surface (20) forms a slip joint permitting said body (15) and/or a load carrying bar (11) to be adjusted about three axes (X, Y, Z)
**characterized in that**
said attachment member (16) is configured to be fixed to the fixed connection point (17) in an attachment position so that it imparts the pivot member (25) with a clamping force so that the at least one pivot member (25) is clamped by said attachment member (16) between said vehicle facing surface (20) of said body (15) and the roof (2) of said vehicle (3) when said attachment member (16) is in an attachment position.

2. The fix point load carrier foot (10, 10') according to claim 1 wherein said pivot surface is a vehicle facing surface (20), a load carrying bar facing surface (21) or a load carrier foot facing surface (21').

3. The fix point load carrier foot (10, 10') according to any one of the preceding claims wherein said slip joint is formed by a portion of a ball and socket joint.

4. The fix point load carrier foot according to any one of the preceding claims wherein said pivot surface (20, 21, 21') is arranged on a floor portion (20f), a top portion (20t) and/or a side portion of said body (15, 15', 15").

5. The fix point load carrier foot according to any one of the preceding claims wherein said body (15, 15', 15"), such as the floor portion, side portion and/or said top portion (20t, 20f), comprises one or more apertures (50, 51, 52), said attachment member (16) extending through at least one of said one or more aperture (50, 51, 52), preferably said diameter of said one or more apertures (50, 51, 52) is larger than the diameter of said attachment member (16) providing a play between said attachment member (16) and said at least one of said one or more aperture (50, 51, 52).

6. The fix point load carrier foot according to any one of the preceding claims wherein said one or more apertures (50, 51, 52) has a diameter which is at least 20 % larger, preferably at least 40 % larger optionally about 20-200 % larger than the diameter of said attachment member (16).

7. The fix point load carrier foot according to any one of the preceding claims wherein said attachment member (16) extends through said at least one pivot member (25, 25') via an aperture or cut out.

8. The fix point load carrier foot according to any one of the preceding claims wherein said at least one pivot member (25, 25') has a smooth surface providing a step-less displacement between the available positions, or a plurality of protrusions and/or indents providing a fixed number of available positions.

9. The fix point load carrier foot according to any one of the preceding claims wherein said load carrier foot (10, 10') further comprises at least one clamp member (23, 23'), for fixing said slip joint, preferably said at least one clamp member (23, 23') is arranged between said vehicle facing surface of said body (20) and/or said load carrying bar facing surface (21) and a portion of said attachment member (16), preferably said at least one clamp member (23, 23') comprises at least one connection member (24) connectable to said at least one pivot member (25, 25') to provide a rigid connection there between.

10. The fix point load carrier foot according to any one of the preceding claims wherein said attachment member (16) has an operable brace portion, wherein said operable brace portion of said attachment member (16) is arranged to impart a clamping force across said at least one pivot member (25, 25'), preferably said body (15, 15') has an interior space and in that said operable brace portion is arranged in said interior space of said body (15, 15'), preferably said operable brace portion is formed by a lever (18), a knob, a nut, screw head or the like.

11. The fix point load carrier foot according to claim 10, wherein said operable brace portion is displaceably arranged on said attachment member (16).

12. The fix point load carrier foot according to any one of the preceding claims wherein said attachment member (16) is arranged to clamp said at least one pivot member (25, 25') and at least one clamp member (23, 23') together, preferably said pivot member (25, 25') and said at least one clamp member (23, 23') being positioned on either side of said top portion (20t), side portion (20s), and/or said floor portion (20f) of said body (15, 15', 15").

13. The fix point load carrier foot according to any one of the preceding claims pivot surface (20, 21, 21') of said body (15, 15', 15") has a shape formed by a first radius (r1, r1'), optionally or additionally, said at least one pivot member (25, 25', 25") has a body facing surface (26) and said body facing surface (26) has a shape formed by a second radius (r2, r2'), preferably said first radius (r1, r1') is equal to said second radius (r2, r2').

14. A roof rack (3) for a vehicle comprising a first and a second load carrier foot (10, 10') according to one of the preceding claims and a load carrying bar (11), said load carrying bar (11) preferably being an over running cross bar, wherein said load carrier feet (10, 10') are positioned a distance from the opposing ends of said load carrying bar (11).

## Patentansprüche

1. Fixpunkt-Lastträgerfuß (10) für einen Dachträger (3) für ein Fahrzeug (1), wobei der Lastträgerfuß (10) einen Hauptteil (15) umfasst, wobei der Hauptteil (15) Folgendes umfasst: eine Schwenkfläche (20), ein Befestigungselement (16), das mit einem feststehenden Verbindungspunkt (17) auf dem Fahrzeug (3) verbindbar ist und zwischen einer Befestigungsposition und einer Freigabeposition betreibbar ist, wobei das mindestens eine Schwenkelement (25) angrenzend an die Schwenkfläche (20) des Hauptteils (15) positioniert ist, wobei das Schwenkelement (25) und die Schwenkfläche (20) ein Gleitgelenk bilden, das dem Hauptteil (15) und/oder einer Lastträgerstange (11) erlaubt, um drei Achsen (X, Y, Z) herum eingestellt zu werden.
**dadurch gekennzeichnet, dass**
das Befestigungselement (16) ausgestaltet ist, an den feststehenden Verbindungspunkt (17) in einer Befestigungsposition derart fixiert zu werden, dass es das Schwenkelement (25) derart mit einer Klemmkraft versieht, dass das mindestens eine Schwenkelement (25) durch das Befestigungselement (16) zwischen der Fläche (20) des Hauptteils (15), die dem Fahrzeug zugewandt ist, und dem Dach (2) des Fahrzeugs (3) eingeklemmt ist, wenn sich das Befestigungselement (16) in einer Befestigungsposition befindet.

2. Fixpunkt-Lastträgerfuß (10, 10') nach Anspruch 1, wobei die Schwenkfläche eine dem Fahrzeug zugewandte Fläche (20), eine der Lastträgerstange zugewandte Fläche (21) oder eine dem Lastträgerfuß zugewandte Fläche (21') ist.

3. Fixpunkt-Lastträgerfuß (10, 10') nach einem der vorhergehenden Ansprüche, wobei das Gleitgelenk durch einen Abschnitt eines Kugelgelenks ausgebildet ist.

4. Fixpunkt-Lastträgerfuß nach einem der vorhergehenden Ansprüche, wobei die Schwenkoberfläche (20, 21, 21') auf einem Bodenabschnitt (20f), einem oberen Abschnitt (20t) und/oder einem Seitenabschnitt des Hauptteils (15, 15', 15") angeordnet ist.

5. Fixpunkt-Lastträgerfuß nach einem der vorhergehenden Ansprüche, wobei der Hauptteil (15, 15', 15"), wie der Bodenabschnitt, der Seitenabschnitt und/oder der obere Abschnitt (20t, 20f), eine oder mehrere Öffnungen (50, 51, 52) umfasst, wobei sich das Befestigungselement (16) durch mindestens eine der einen oder der mehreren Öffnungen (50, 51, 52) erstreckt, wobei der Durchmesser der einen oder der mehreren Öffnungen (50, 51, 52) vorzugsweise größer als der Durchmesser des Befestigungselements (16) ist, und dabei ein Spiel zwischen dem Befestigungselement (16) und der mindestens einen der einen oder der mehreren Öffnungen (50, 51, 52) vorsieht.

6. Fixpunkt-Lastträgerfuß nach einem der vorhergehenden Ansprüche, wobei die eine oder die mehreren Öffnungen (50, 51, 52) einen Durchmesser aufweisen, der mindestens 20 % größer, vorzugsweise mindestens 40 % größer, und wahlweise etwa 20-200 % größer als der Durchmesser des Befestigungselements (16) ist.

7. Fixpunkt-Lastträgerfuß nach einem der vorhergehenden Ansprüche, wobei sich das Befestigungselement (16) über eine Öffnung oder eine Aussparung durch das mindestens eine Schwenkelement (25, 25') erstreckt.

8. Fixpunkt-Lastträgerfuß nach einem der vorhergehenden Ansprüche, wobei das mindestens eine Schwenkelement (25, 25') eine glatte Fäche aufweist, die eine stufenlose Verschiebung zwischen den verfügbaren Positionen, oder einer Vielzahl von Vorsprüngen und/oder Einkerbungen vorsieht, die eine feststehende Anzahl von verfügbaren Positionen vorsehen.

9. Fixpunkt-Lastträgerfuß nach einem der vorhergehenden Ansprüche, wobei der Lastträgerfuß (10, 10') ferner Folgendes umfasst: mindestens ein Klemmelement (23, 23') zum Fixieren des Gleitgelenks, wobei das mindestens eine Klemmelement (23, 23') vorzugsweise zwischen der Fläche des Hauptteils (20), die dem Fahrzeug zugewandt ist, und/oder der Fläche (21), die der Lastträgerstange zugewandt ist, und einem Abschnitt des Befestigungselements (16) angeordnet ist, wobei das mindestens eine Klemmelement (23, 23') vorzugsweise mindestens ein Verbindungselement (24) umfasst, das mit dem mindestens einen Schwenkelement (25, 25') verbindbar ist, um eine robuste Verbindung dazwischen bereitzustellen.

10. Fixpunkt-Lastträgerfuß nach einem der vorhergehenden Ansprüche, wobei das Befestigungselement (16) einen bedienbaren Abstützabschnitt aufweist, wobei der bedienbare Abstützabschnitt des Befestigungselements (16) dafür eingerichtet ist, eine Klemmkraft entlang des mindestens einen Schwenkelements (25, 25') auszuüben, wobei der Hauptteil (15, 15') vorzugsweise einen Innenraum aufweist, und wobei der bedienbare Abstützabschnitt im Innenraum des Hauptteils (15, 15') angeordnet ist, wobei der bedienbare Abstützabschnitt vorzugsweise durch einen Hebel (18), einen Drehknopf, eine Mutter, einen Schraubenkopf oder dergleichen ausgebildet ist.

11. Fixpunkt-Lastträgerfuß nach Anspruch 10, wobei der bedienbare Abstützabschnitt auf dem Befestigungselement (16) verschiebbar angeordnet ist.

12. Fixpunkt-Lastträgerfuß nach einem der vorhergehenden Ansprüche, wobei das Befestigungselement (16) dafür eingerichtet ist, das mindestens eine Schwenkelement (25, 25') und das mindestens eine Klemmelement (23, 23') zusammenzuklemmen, wobei das Schwenkelement (25, 25') und das mindestens eine Klemmelement (23, 23') vorzugsweise auf jeder Seite des oberen Abschnitts (20t), des Seitenabschnitts (20s) und/oder des Bodenabschnitts (20f) des Hauptteils (15, 15', 15") positioniert sind.

13. Fixpunkt-Lastträgerfuß nach einem der vorhergehenden Ansprüche, wobei die Schwenkfläche (20, 21, 21') des Hauptteils (15, 15', 15") wahlweise oder zusätzlich eine Form aufweist, die durch einen ersten Radius (r1, r1') ausgebildet ist, wobei das mindestens eine Schwenkelement (25, 25', 25") eine dem Hauptteil zugewandte Fläche (26) aufweist und die dem Hauptteil zugewandte Fläche (26) eine Form aufweist, die durch einen zweiten Radius (r2, r2') ausgebildet ist, wobei der erste Radius (r1, r1') vorzugsweise dieselbe Größe wie der zweite Radius (r2, r2') aufweist.

14. Dachträger (3) für ein Fahrzeug, umfassend einen ersten und einen zweiten Lastträgerfuß (10, 10') nach einem der vorhergehenden Ansprüche und eine Lastträgerstange (11), wobei die Lastträgerstange (11) vorzugsweise eine Freilaufquerstange ist, wobei die Lastträgerfüße (10, 10') von den gegenüberliegenden Enden der Lastträgerstange (11) entfernt positioniert sind.

## Revendications

1. Pied de support de charge sur point fixe (10) pour une galerie de toit (3) d'un véhicule (1), ledit pied de support de charge (10) comprenant un corps (15), ledit corps (15) comprenant une surface pivot (20), une attache (16) pouvant être raccordée à un point de raccordement fixe (17) sur ledit véhicule (1) et pouvant être manoeuvrée entre une position de fixation et une position libérée, au moins un élément pivot (25) étant placé adjacent à ladite surface pivot (20) dudit corps (15), ledit élément pivot (25) et ladite surface pivot (20) formant un joint coulissant permettant de régler ledit corps (15) et/ou une barre porte-charge (11) par rapport à trois axes (X, Y, Z)
**caractérisé en ce que**
ladite attache (16) est conçue pour être fixée au point de raccordement fixe (17) dans une position de fixation telle qu'elle transmet à l'élément pivot (25) une force de serrage de sorte qu'au moins un élément pivot (25) est serré par ladite attache (16) entre ladite surface orientée vers le véhicule (20) dudit corps (15) et le toit (2) dudit véhicule (1) lorsque ladite attache (16) est en position de fixation.

2. Pied de support de charge sur point fixe (10, 10') selon la revendication 1, dans lequel ladite surface pivot est une surface orientée vers le véhicule (20), une surface orientée vers la barre porte-charge (21) ou une surface orientée vers le pied de support de charge (21').

3. Pied de support de charge sur point fixe (10, 10') selon l'une quelconque des revendications précédentes, dans lequel ledit joint coulissant est formé par une portion de joint à rotule.

4. Pied de support de charge sur point fixe selon l'une quelconque des revendications précédentes, dans lequel ladite surface pivot (20, 21, 21') est conçue sur une portion de sol (20f), une portion supérieure (20t) et/ou une portion latérale dudit corps (15, 15', 15").

5. Pied de support de charge sur point fixe selon l'une quelconque des revendications précédentes, dans lequel ledit corps (15, 15', 15"), tel que la portion de sol, la portion latérale et/ou la portion supérieure (20t, 20f), comprend une ou plusieurs ouvertures (50, 51, 52), ladite attache (16) s'étendant au travers au moins une desdites une ou plusieurs ouvertures (50, 51, 52), le diamètre desdites une ou plusieurs ouvertures (50, 51, 52) étant de préférence supérieur au diamètre de ladite attache (16), procurant un jeu entre ladite attache (16) et ladite au moins une desdites une ou plusieurs ouvertures (50, 51, 52).

6. Pied de support de charge sur point fixe selon l'une quelconque des revendications précédentes, dans lequel lesdites une ou plusieurs ouvertures (50, 51, 52) ont un diamètre au moins 20 % supérieur, de préférence au moins 40 % supérieur, pouvant être environ 20 à 200 % supérieur au diamètre de ladite attache (16).

7. Pied de support de charge sur point fixe selon l'une quelconque des revendications précédentes, dans lequel ladite attache (16) s'étend au travers dudit au moins un élément pivot (25, 25') par une ouverture ou une découpe.

8. Pied de support de charge sur point fixe selon l'une quelconque des revendications précédentes, dans lequel ledit au moins un élément pivot (25, 25') a une surface lisse permettant un déplacement continu entre les deux positions possibles, ou une pluralité de protrusions et/ou d'indentations fournissant un nombre déterminé de positions possibles.

9. Pied de support de charge sur point fixe selon l'une quelconque des revendications précédentes, dans lequel ledit pied de support de charge (10, 10') comprend en outre au moins un élément de serrage (23, 23') pour fixer ledit joint coulissant, ledit au moins un élément de serrage (23, 23') étant de préférence disposé entre ladite surface orientée vers le véhicule (20) dudit corps et/ou ladite surface orientée vers la barre porte-charge (21) et une portion de ladite attache (16), ledit au moins un élément de serrage (23, 23') comprenant de préférence au moins un élément raccord (24) qui peut être raccordé audit un moins un élément pivot (25, 25') afin de former une liaison rigide entre eux.

10. Pied de support de charge sur point fixe selon l'une quelconque des revendications précédentes, dans lequel ladite attache (16) possède une pièce de serrage manoeuvrable, ladite pièce de serrage manoeuvrable de ladite attache (16) étant conçue pour transmettre une force de serrage vers ledit au moins un élément pivot (25, 25'), ledit corps (15, 15') possédant de préférence un espace intérieur et ladite pièce de serrage manoeuvrable étant disposée dans ledit espace intérieur dudit corps (15, 15'), ladite pièce de serrage manoeuvrable étant de préférence constituée par un levier (18), un bouton, un écrou, une tête de vis ou un élément similaire.

11. Pied de support de charge sur point fixe selon la revendication 10, dans lequel la pièce de serrage manoeuvrable est disposée sur ladite attache (16) de manière à pouvoir être déplacée.

12. Pied de support de charge sur point fixe selon l'une quelconque des revendications précédentes, dans lequel ladite attache (16) est conçue pour serrer ensemble ledit au moins un élément pivot (25, 25') et au moins un élément de serrage (23, 23'), ledit élément pivot (25, 25') et ledit au moins un élément de serrage (23, 23') étant de préférence placés de part et d'autre de ladite portion supérieure (20t), de ladite portion latérale (20s), et/ou de ladite portion de sol (20f) dudit corps (15, 15', 15").

13. Pied de support de charge sur point fixe selon l'une quelconque des revendications précédentes, dans lequel la surface pivot (20, 21, 21') dudit corps (15, 15', 15") possède une forme constituée d'un premier rayon (r1, r1'), ledit au moins un élément pivot (25, 25', 25") possédant éventuellement ou en supplément une surface orientée vers le corps (26) et ladite surface orientée vers le corps (26) a une forme constituée par un deuxième rayon (r2, r2'), ledit premier rayon (r1, r1') étant de préférence égal au deuxième rayon (r2, r2').

14. Galerie de toit (3) pour un véhicule comprenant un premier et un deuxième pied de support de charge (10, 10') selon l'une des revendications précédentes
et une barre porte-charge (11), ladite barre porte-charge (11) étant de préférence une barre supérieure transversale, où lesdits pieds de support de charge (10, 10') sont placés à distance des extrémités opposées de ladite barre porte-charge (11).
